# EUROPEAN PATENT APPLICATION

(11) **EP 4 277 187 A1**
(43) Date of publication of application: **15.11.2023**
(21) Application number: 22736907.1
(22) Date of filing: 10.01.2022
(51) Int. Cl.: H04L 5/00, H04W 72/04, H04W 8/22

(54) **MRTD AND MTTD FOR CBM TERMINAL**

(30) Priority: 11.01.2021 KR 20210003292; 22.07.2021 KR 20210096577
(71) Applicant: LG Electronics Inc., Yeongdeungpo-gu Seoul 07336 (KR)
(72) Inventor: YANG, Yoonoh, Seoul 06772 (KR); LEE, Sangwook, Seoul 06772 (KR); LIM, Suhwan, Seoul 06772 (KR); HWANG, Jinyup, Seoul 06772 (KR); PARK, Jinwoong, Seoul 06772 (KR)
(74) Representative: Plasseraud IP
(86) International application number: PCT/KR2022/000369
(87) International publication number: WO 2022/149930

(57) **Abstract**

One embodiment described in the present specification provides a method for a user equipment (UE) to communicate. The method comprises the steps of: transmitting and receiving a signal in an n-th slot through a first component carrier (CC) via a common beam; transmitting and receiving a signal in the n-th slot through a second CC via the common beam; performing Rx beam switching for receiving a downlink signal; receiving the downlink signal in an (n+1)-th slot through the first CC via the common beam; and receiving the downlink signal in the (n+1)-th slot through the second CC via the common beam, wherein n is an integer of at least 1, the downlink signal received through the first CC is received more quickly than the downlink signal received through the second CC, the Rx beam switching is performed at the boundary between the n-th slot and the (n+1)-th slot of the first CC on the basis that the time difference between the first CC and the second CC exceeds a threshold value, and an interruption occurs at the final symbol of the n-th slot of the second CC on the basis that the time difference between the first CC and the second CC exceeds the threshold value.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### TECHNICAL PROBLEM

There is no standard considering the operation of the existing CBM (Common Beam Management) terminal, which is a problem.

### TECHNICAL SOLUTION

Specifications for MRTD and MTTD for CBM terminals is provided.

### ADVANTAGEOUS EFFECTS

The specification may have various effects.

For example, through the procedure disclosed in this specification, it is possible to avoid deterioration of the reception performance of the CBM UE.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIGS. 5a to 5c are exemplary diagrams illustrating an exemplary architecture for a service of next-generation mobile communication.
FIG. 6 shows an example of subframe types in NR.
FIG. 7 is an exemplary diagram illustrating an example of an SS block in NR.
FIG. 8 is an exemplary diagram illustrating an example of beam sweeping in NR.
FIG. 9 is an exemplary diagram illustrating an example of Rx beam switch for CBM UE.
FIG. 10 is an exemplary diagram illustrating an example of an Rx beam switch.
FIG. 11 is an exemplary diagram illustrating an example of Tx beam switch of a CBM UE.
FIG. 12 shows a procedure of a terminal according to the disclosure of the present specification.

### BEST MODE

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C" .

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDDCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

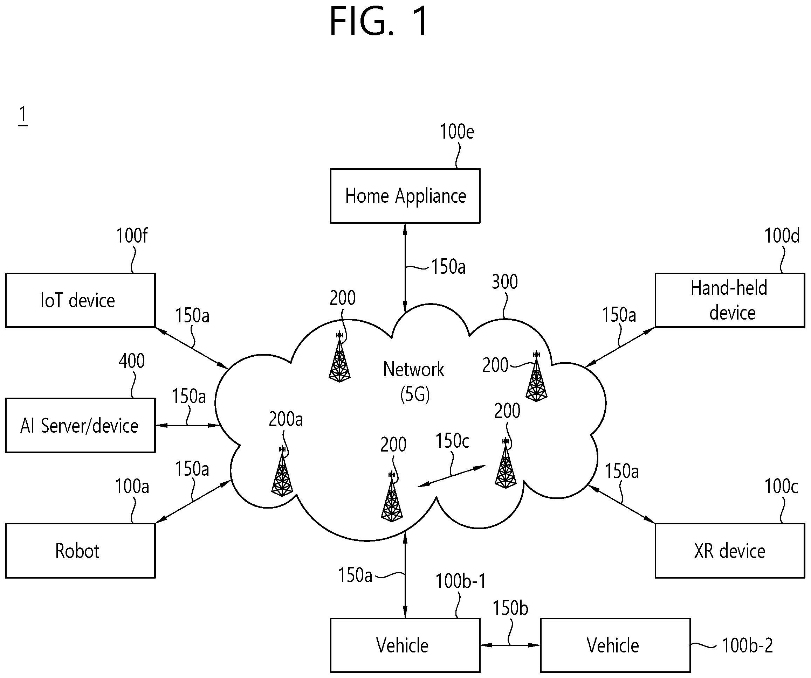

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closedcircuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make selfdetermination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

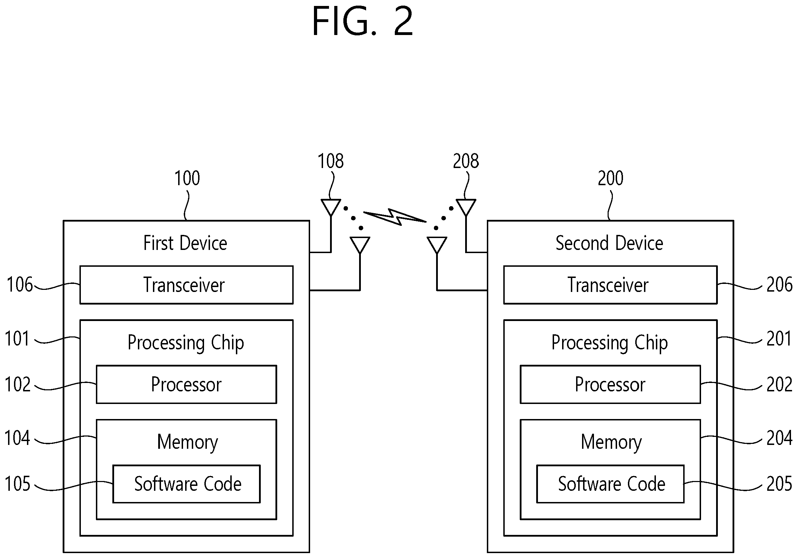

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

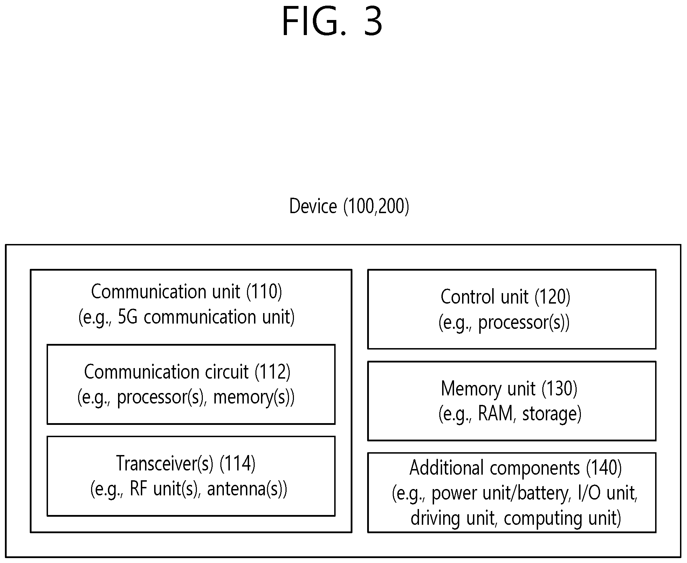

**FIG. 3** **shows an example of a wireless device to which implementations of the present disclosure is applied.**

The wireless device may be implemented in various forms according to a usecase/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

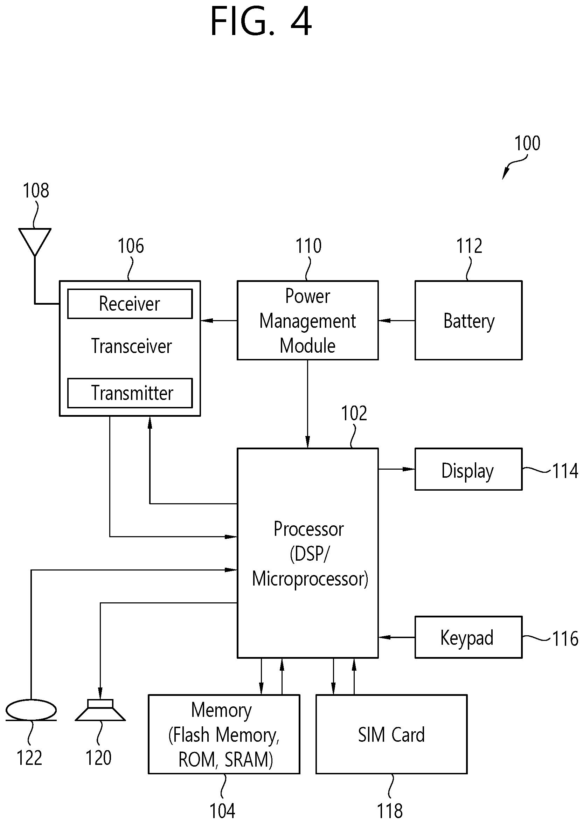

**FIG. 4** **shows an example of UE to which implementations of the present disclosure is applied.**

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, a series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

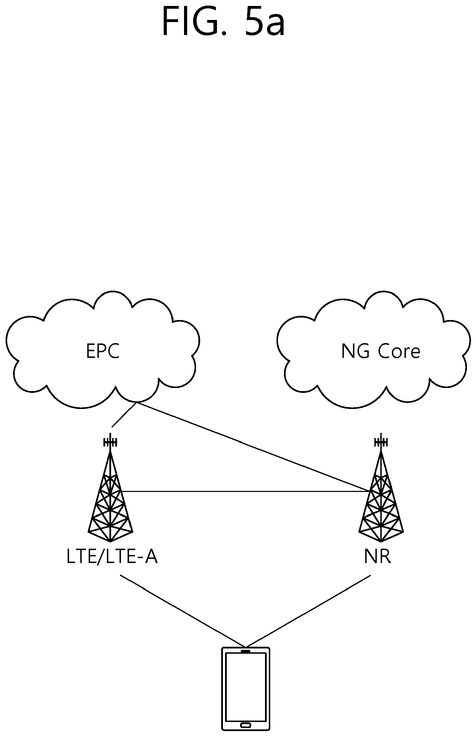

**FIGS. 5a to 5c** **are exemplary diagrams illustrating an exemplary architecture for a service of next-generation mobile communication.**

Referring to FIG. 5a, the UE is connected to the LTE/LTE-A-based cell and the NR-based cell in a DC (dual connectivity) manner.

The NR-based cell is connected to a core network for the existing 4G mobile communication, that is, the NR-based cell is connected an Evolved Packet Core (EPC).

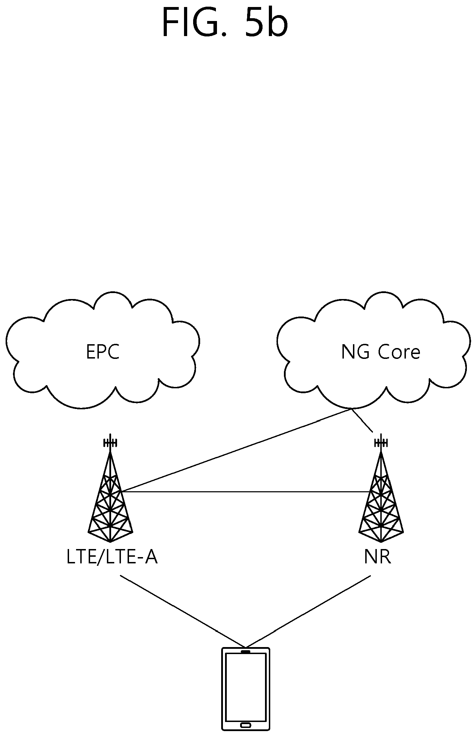

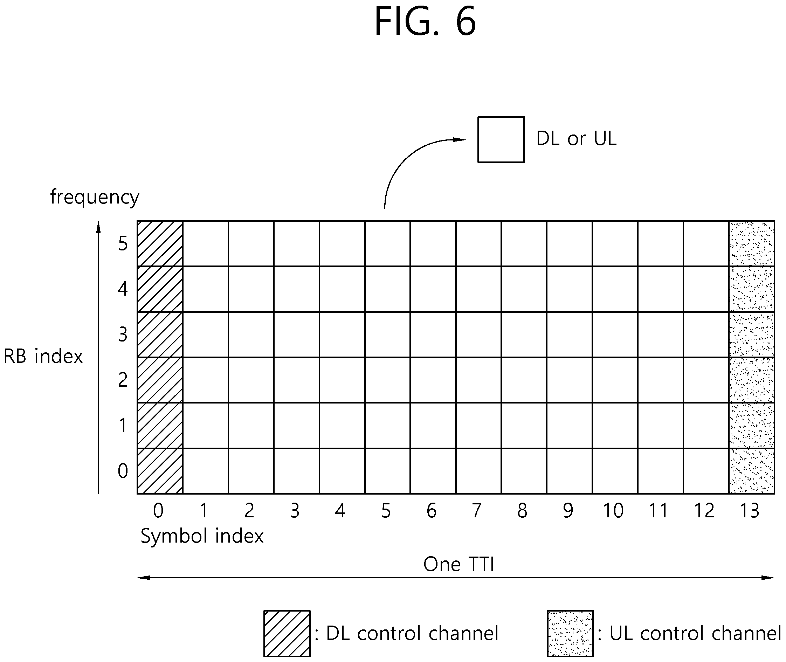

Referring to FIG. 5b, unlike FIG. 6a, an LTE/LTE-A-based cell is connected to a core network for 5G mobile communication, that is, the LTE/LTE-A-based cell is connected to a Next Generation (NG) core network.

A service method based on the architecture shown in FIG 5a and FIG 5b is referred to as NSA (non-standalone).

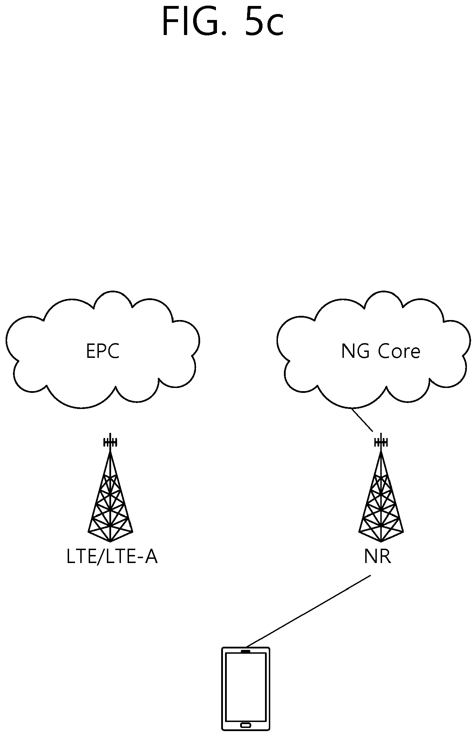

Referring to FIG. 5c, UE is connected only to an NR-based cell. A service method based on this architecture is called SA (standalone).

Meanwhile, in the NR, it may be considered that reception from a base station uses downlink subframe, and transmission to a base station uses uplink subframe. This method can be applied to paired and unpaired spectra. A pair of spectrum means that two carrier spectrums are included for downlink and uplink operation. For example, in a pair of spectrums, one carrier may include a downlink band and an uplink band that are paired with each other.

**FIG. 6** **shows an example of subframe types in NR.**

The TTI (transmission time interval) shown in FIG. 6 may be referred to as a subframe or a slot for NR (or new RAT). The subframe (or slot) of FIG. 6 may be used in a TDD system of NR (or new RAT) to minimize data transmission delay. As shown in FIG. 6, a subframe (or slot) includes 14 symbols, like the current subframe. The front symbol of the subframe (or slot) may be used for the DL control channel, and the rear symbol of the subframe (or slot) may be used for the UL control channel. The remaining symbols may be used for DL data transmission or UL data transmission. According to this subframe (or slot) structure, downlink transmission and uplink transmission may be sequentially performed in one subframe (or slot). Accordingly, downlink data may be received within a subframe (or slot), and uplink acknowledgment (ACK/NACK) may be transmitted within the subframe (or slot). The structure of such a subframe (or slot) may be referred to as a self-contained subframe (or slot). When the structure of such subframe (or slot) is used, the time it takes to retransmit data in which a reception error occurs is reduced, so that the final data transmission latency can be minimized. In such a self-contained subframe (or slot) structure, a time gap, from the transmission mode to the reception mode or from the reception mode to the transmission mode, may be required in a transition process. To this, some OFDM symbols when switching from DL to UL in the subframe structure may be set as a guard period (GP).

### <Support of Various Numerologies>

In the next generation system, with development of wireless communication technologies, a plurality of numerologies may be provided to a UE.

The numerologies may be defined by a length of cycle prefix (CP) and a subcarrier spacing. One cell may provide a plurality of numerology to a UE. When an index of a numerology is represented by µ, a subcarrier spacing and a corresponding CP length may be expressed as shown in the following table.

**[Table 3]**

| M | Δf=2µ·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

In the case of a normal CP, when an index of a numerology is expressed by µ, the number of OLDM symbols per slot Nslotsymb, the number of slots per frame Nframe,µslot, and the number of slots per subframe Nsubframe,µslot are expressed as shown in the following table.

**[Table 4]**

| µ | Nslotsymb | Nframe,µslot | Nsubframe,µslot |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

In the case of an extended CP, when an index of a numerology is represented by µ, the number of OLDM symbols per slot Nslotsymb, the number of slots per frame Nframe,µslot, and the number of slots per subframe Nsubframe,µslot are expressed as shown in the following table.

**[Table 5]**

| M | Nslotsymb | Nframe,µslot | Nsubframe,µslot |
|---|---|---|---|
| 2 | 12 | 40 | 4 |

Meanwhile, in next-generation mobile communication, each symbol within a symbol may be used as a downlink or an uplink as shown in the table below. In the table below, uplink is denoted by U, and downlink is denoted by D. In the table below, X represents a symbol that can be flexibly used in uplink or downlink.

**[Table 6]**

| format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | X | X | X | X | X | X | X | X | X | X | X | X | X | X |
| 3 | D | D | D | D | D | D | D | D | D | D | D | D | D | X |
| 4 | D | D | D | D | D | D | D | D | D | D | D | D | X | X |
| 5 | D | D | D | D | D | D | D | D | D | D | D | X | X | X |
| 6 | D | D | D | D | D | D | D | D | D | D | X | X | X | X |
| 7 | D | D | D | D | D | D | D | D | D | X | X | X | X | X |
| 8 | X | X | X | X | X | X | X | X | X | X | X | X | X | U |
| 9 | X | X | X | X | X | X | X | X | X | X | X | X | U | U |
| 10 | X | U | U | U | U | U | U | U | U | U | U | U | U | U |
| 11 | X | X | U | U | U | U | U | U | U | U | U | U | U | U |
| 12 | X | X | X | U | U | U | U | U | U | U | U | U | U | U |
| 13 | X | X | X | X | U | U | U | U | U | U | U | U | U | U |
| 14 | X | X | X | X | X | U | U | U | U | U | U | U | U | U |
| 15 | X | X | X | X | X | X | U | U | U | U | U | U | U | U |
| 16 | D | X | X | X | X | X | X | X | X | X | X | X | X | X |
| 17 | D | D | X | X | X | X | X | X | X | X | X | X | X | X |
| 18 | D | D | D | X | X | X | X | X | X | X | X | X | X | X |
| 19 | D | X | X | X | X | X | X | X | X | X | X | X | X | U |
| 20 | D | D | X | X | X | X | X | X | X | X | X | X | X | U |
| 21 | D | D | D | X | X | X | X | X | X | X | X | X | X | U |
| 22 | D | X | X | X | X | X | X | X | X | X | X | X | U | U |
| 23 | D | D | X | X | X | X | X | X | X | X | X | X | U | U |
| 24 | D | D | D | X | X | X | X | X | X | X | X | X | U | U |
| 25 | D | X | X | X | X | X | X | X | X | X | X | U | U | U |
| 26 | D | D | X | X | X | X | X | X | X | X | X | U | U | U |
| 27 | D | D | D | X | X | X | X | X | X | X | X | U | U | U |
| 28 | D | D | D | D | D | D | D | D | D | D | D | D | X | U |
| 29 | D | D | D | D | D | D | D | D | D | D | D | X | X | U |
| 30 | D | D | D | D | D | D | D | D | D | D | X | X | X | U |
| 31 | D | D | D | D | D | D | D | D | D | D | D | X | U | U |
| 32 | D | D | D | D | D | D | D | D | D | D | X | X | U | U |
| 33 | D | D | D | D | D | D | D | D | D | X | X | X | U | U |
| 34 | D | X | U | U | U | U | U | U | U | U | U | U | U | U |
| 35 | D | D | X | U | U | U | U | U | U | U | U | U | U | U |
| 36 | D | D | D | X | U | U | U | U | U | U | U | U | U | U |
| 37 | D | X | X | U | U | U | U | U | U | U | U | U | U | U |
| 38 | D | D | X | X | U | U | U | U | U | U | U | U | U | U |
| 39 | D | D | D | X | X | U | U | U | U | U | U | U | U | U |
| 40 | D | X | X | X | U | U | U | U | U | U | U | U | U | U |
| 41 | D | D | X | X | X | U | U | U | U | U | U | U | U | U |
| 42 | D | D | D | X | X | X | U | U | U | U | U | U | U | U |
| 43 | D | D | D | D | D | D | D | D | D | X | X | X | X | U |
| 44 | D | D | D | D | D | D | X | X | X | X | X | X | U | U |
| 45 | D | D | D | D | D | D | X | X | U | U | U | U | U | U |
| 46 | D | D | D | D | D | D | X | D | D | D | D | D | D | X |
| 47 | D | D | D | D | D | X | X | D | D | D | D | D | X | X |
| 48 | D | D | X | X | X | X | X | D | D | X | X | X | X | X |
| 49 | D | X | X | X | X | X | X | D | X | X | X | X | X | X |
| 50 | X | U | U | U | U | U | U | X | U | U | U | U | U | U |
| 51 | X | X | U | U | U | U | U | X | X | U | U | U | U | U |
| 52 | X | X | X | U | U | U | U | X | X | X | U | U | U | U |
| 53 | X | X | X | X | U | U | U | X | X | X | X | U | U | U |
| 54 | D | D | D | D | D | X | U | D | D | D | D | D | X | U |
| 55 | D | D | X | U | U | U | U | D | D | X | U | U | U | U |
| 56 | D | X | U | U | U | U | U | D | X | U | U | U | U | U |
| 57 | D | D | D | D | X | X | U | D | D | D | D | X | X | U |
| 58 | D | D | X | X | U | U | U | D | D | X | X | U | U | U |
| 59 | D | X | X | U | U | U | U | D | X | X | U | U | U | U |
| 60 | D | X | X | X | X | X | U | D | X | X | X | X | X | U |
| 61 | D | D | X | X | X | X | U | D | D | X | X | X | X | U |

### <NR to SS block>

SS block (SS / PBCH block: SSB) include information necessary for the terminal to perform initial access in 5G NR, that is, a physical broadcast channel (PBCH) including a master information block (MIB) and a synchronization signal (Synchronization Signal: SS) (PSS and SSS).

In addition, a plurality of SSBs may be bundled to define an SS burst, and a plurality of SS bursts may be bundled to define an SS burst set. It is assumed that each SSB is beamformed in a specific direction, and several SSBs in the SS burst set are designed to support terminals existing in different directions, respectively.

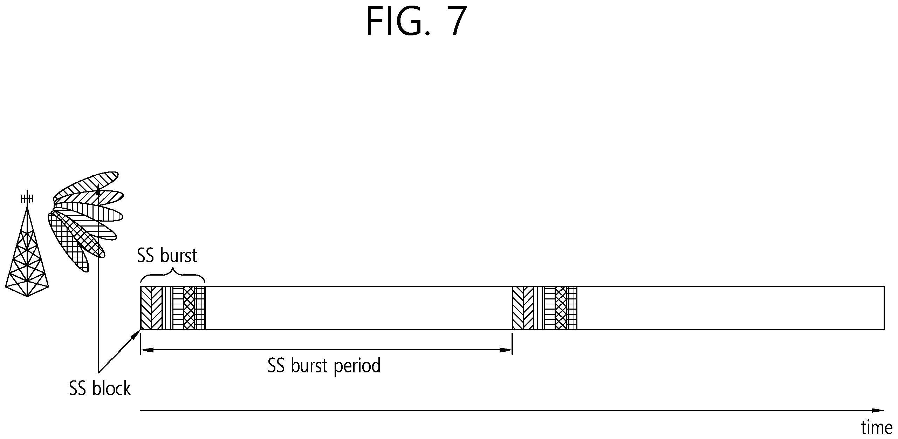

**FIG. 7** **is an exemplary diagram illustrating an example of an SS block in NR.**

Referring to FIG. 7, the SS burst is transmitted every predetermined period. Accordingly, the terminal receives the SS block, and performs cell detection and measurement.

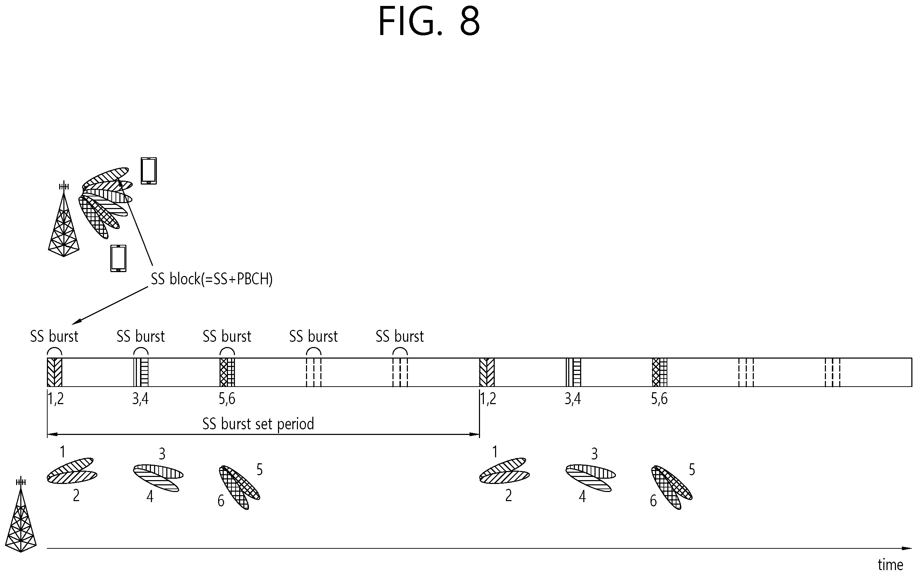

Meanwhile, in 5G NR, beam sweeping is performed for SS. This will be described with reference to FIG. 8.

**FIG. 8** **is an exemplary diagram illustrating an example of beam sweeping in NR.**

The base station transmits each SS block in the SS burst while performing beam sweeping according to time. In this case, several SS blocks in the SS burst set are transmitted to support terminals existing in different directions, respectively.

### <Problems to be solved in the disclosure of this specification>

Only IBM (Independent Beam Management) was considered for FR2 inter-band CA-related terminal operation, and therefore, a standard considering CBM (Common Beam Management) terminal operation is required.

In IBM (Independent Beam Management), a terminal supporting FR2 inter-band CA may apply an independent beam corresponding to a carrier constituting CA by implementing a beam-related RF chain for each carrier.

In CBM (Common Beam Management), a terminal supporting FR2 inter-band CA may apply a common beam to carriers constituting CA by implementing one beam-related RF chain.

### <Disclosure of the present specification>

Disclosures described later in this specification may be implemented in one or more combinations (e.g., a combination including at least one of the contents described below). Each of the drawings represents an embodiment of each disclosure, but the embodiments of the drawings may be implemented in combination with each other.

Description of the method proposed in the disclosure of this specification may be composed of a combination of one or more operations/configurations/steps described below. The following methods described below may be performed or used in combination or complementary.

The following drawings are made to explain a specific example of the present specification. Since the names of specific devices or names of specific signals/messages/fields described in the drawings are provided as examples, the technical features of the present specification are not limited to the specific names used in the drawings below.

In this specification, a basic environment for a CBM (common beam management) UE to support FR2 inter-band CA, a terminal operation related to timing and related standards are proposed. Standard specifications of MRTD (maximum received timing difference) and MTTD (maximum transmitted timing difference) may be included.

MRTD is the maximum value of the difference in reception time, and MTTD is the maximum value of the difference in transmission time.

IBM UE capabilities are applicable to all CA configurations. If CBM or IBM is concluded as infeasible for certain band combinations, only feasible BM (beam management) may be applied for the certain band combinations. If both CBM and IBM are concluded as feasible for certain band combinations, either IBM or CBM may be applied depending on the capabilities of the UE. Typical inter-band CA deployment between bands in the same frequency group cannot be limited to co-located deployments.

### 1. CBM applicability

If CBM or IBM is concluded as infeasible for certain band combinations, it is reasonable to clearly state in the spec that only the requirements of feasible BM apply to these band combinations. If both CBM and IBM are concluded as feasible for certain band combinations, the choice of IBM/CBM is up to UE's capability.

Typical inter-band CA deployment between bands in the same frequency group may not be limited to co-located deployments. IBM UEs may be implementable. Feasibility to support may be left to UE vendor (implementation) choice.

In general, beam forming parameters may be related to frequency. If inter-band CA is configured with different frequency group, L+H (Low band + High band, e.g., 28GHz + 39GHz), difference of frequency between CCs may be very high. If UE supports IBM, optimal beam forming for each band may be performed regardless of difference of frequency. However if UE supports CBM, optimal beam forming may not be performed. This may result in big performance degradation.

On the other hand, if inter-band CA is configured within same frequency group, L+L (Low band + Low band) (e.g., 28GHz + 28GHz) or H+H (High band+High band) (e.g., 39GHz + 39GHz), difference of frequency between CCs may be not high. If UE supports CBM, it may be expected performance degradation is not high.

Therefore, CBM may be applicable to inter-band CA within same frequency group rather than with difference frequency group

CBM cannot support different beam directions simultaneously with common beam, however, can support same beam direction. Same beam direction is possible in co-located deployment. Therefore, CBM can be applicable to co-located deployment. Assuming co-located deployment for CBM UEs, MRTD and MTTD requirements may be defined.

### 2. MRTD (Maximum Receive Timing Difference) for CBM

MRTD for CBM UE in FR2 inter-band DL CA will be described. In Rel-16, MRTD of 8us is specified for inter-band DL CA with IBM and non-collocated deployment. Herein, 8us is calculated from time alignment error (TAE)(3us) + T_{propagation}(5us).

For inter-band DL CA with co-located deployment, MRTD is not yet defined, however, it may be equal to TAE considering no difference of propagation delay between each CC. If reusing TAE for inter-band CA in Rel-16, MRTD may be 3us which is larger than Cyclic Prefix (CP) length. This means that symbol boundary among CCs is not aligned within CP.

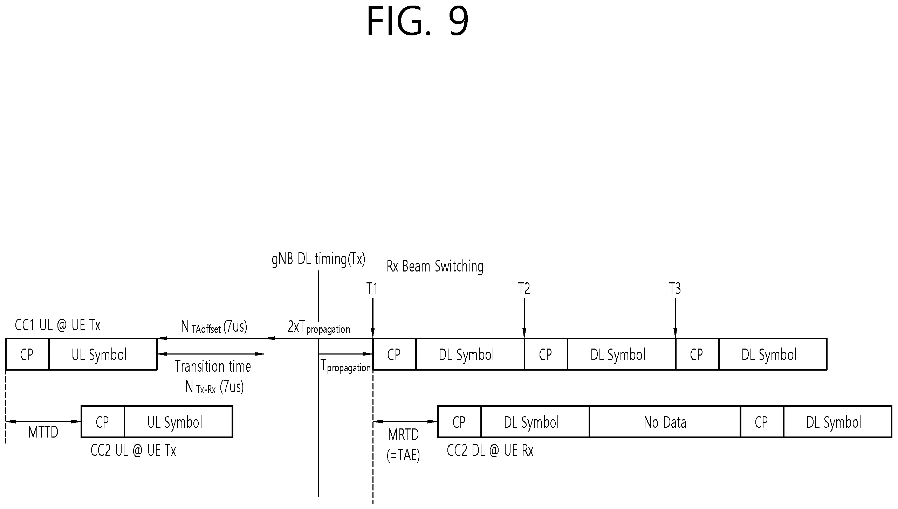

**FIG. 9** **is an exemplary diagram illustrating an example of Rx beam switch for CBM UE.**

The example shown in FIG. 9 assumes i) co-located deployment, ii) MRTD of 3us > CP, and iii) Same UL-DL configuration for inter-band CA.

The RX beam switch means i) changing the Rx beam to the changed direction when the direction is changed due to the movement of the terminal in the Rx mode for receiving signals in the Rx beam, or ii) changing from the mode for transmission to the mode for reception.

The RX beam switch in this specification may include the above two cases.

How to minimize performance degradation due to the Rx beam switch is important.

T1 is located at the start of the first downlink symbol (including CP) which is earliest among CCs after transition time N_{Tx-Rx}. T2 is located at downlink symbol boundary between contiguous DL symbols on CC1 and within DL symbol on CC2. T3 is located at downlink symbol boundary between contiguous DL symbols on CC1 and no DL symbol on CC2. T_{propagation} is the propagation delay time, TAE is Timing Alignment Error in gNB (ex. 3us), N_{Tx-Rx} is transition time from Tx to Rx (13792Tc = 7us for FR2), N_{TAoffset} is TA offset (13792Tc for FR2 = 7us). A UE may be not expected to receive in the downlink earlier than N_{Tx-Rx} after the end of the last transmitted uplink symbol in the same cell.

At T1 and T3, there is no DL data in CC2. At T2, DL data on CC2 is overlapped with Rx beam switch.

For Rx beam switch at T1, there is no interruption on DL data on CC2 due to Rx beam switch. However, Rx beam switch in UL-DL switch may be not guaranteed because Rx beam switch can be performed at any DL symbol boundary.

For Rx beam switch at T2, performance degradation may occur on CC2 since Rx beam switch is performed within symbol on CC2 if MRTD is larger than CP. And, Rx beam switch may occur frequently according to channel condition such as moving and environment around UE. As a result, performance degradation may be significant in some condition.

For Rx beam switch at T3, there is no interruption on DL data on CC2 due to Rx beam switch. However, Rx beam switch in no DL symbol on other CC may not be guaranteed.

As a result, performance degradation due to Rx beam switch may occur on one of CCs in case that MRTD is larger than CP. On the other hand, if MRTD is less than CP, performance degradation due to Rx beam switch may not be expected.

For CBM on inter-band DL CA, performance degradation due to Rx beam switch may be allowed if MRTD is defined that is larger than CP.

For CBM on inter-band DL CA, MRTD may be less than CP length to avoid performance degradation due to Rx beam switch. MRTD may be 260ns.

MRTD and RRM requirements for CBM UEs may be defined based on co-located deployment scenarios only. There may be no deployment restrictions on co-located or non-co-located deployment for network to configure inter-band DL CA for CBM UEs.

The options for MRTD are:
- Option 1: MRTD may not be larger than "CP length - UE Rx beam switch time - 2 x DL timing error" and the max SCS may be 120kHz.
- Option 2: MRTD for inter-band CA in FR2 may be 3us under CBM. If the MRTD exceed [TBD us or CP or CP/2], a performance degradation may expected for the first N symbols of the slot.

Table 7 shows an example for MRTD.

**[Table 7]**

| Frequency Range of the pair of carriers | MRTD(Maximum receive timing difference) (µs) |
|---|---|
| FR1 | 33 |
| FR2 | 8^{note1} |
| FR2 | 3^{note2} |
| Between FR1 and FR2 | 25 |
| Note1: This requirement applies to the UE capable of independent beam management for FR2 inter-band CA. | |
| Note2: This requirement applies to the UE capable of common beam management for FR2 inter-band CA. If the receive time difference exceeds [the cyclic prefix length of that SCS], demodulation performance degradation may be expected. | |

- Option 3: UE may support, MRTD = [260ns] and/or MRTD = [3us]. In the case of CBM, the Rx beam switch may commonly be applied to L+H (low band + high band) band. NR is designed to operate in the FR2 operating band defined in Table 8. Here, n257, n258 and n261 is assumed for L band and, n259 and n260 is assumed for H.

**[Table 8]**

| Operatin g Band | Uplink (UL) operating band | | | Downlink (DL) operating band | | | Duplex Mode |
|---|---|---|---|---|---|---|---|
| | BS receive | | | BS transmit | | | |
| | UE transmit | | | UE receive | | | |
| | F_{UL_low} -F_{UL_high} | | | F_{DL_low} -F_{DL_high} | | | |
| n257 | 26500 MHz | - | 29500 MHz | 26500 MHz | - | 29500 MHz | TDD |
| n258 | 24250 MHz | - | 27500 MHz | 24250 MHz | - | 27500 MHz | TDD |
| n259 | 39500 MHz | - | 43500 MHz | 39500 MHz | - | 43500 MHz | TDD |
| n260 | 37000 MHz | - | 40000 MHz | 37000 MHz | - | 40000 MHz | TDD |
| n261 | 27500 MHz | - | 28350 MHz | 27500 MHz | - | 28350 MHz | TDD |

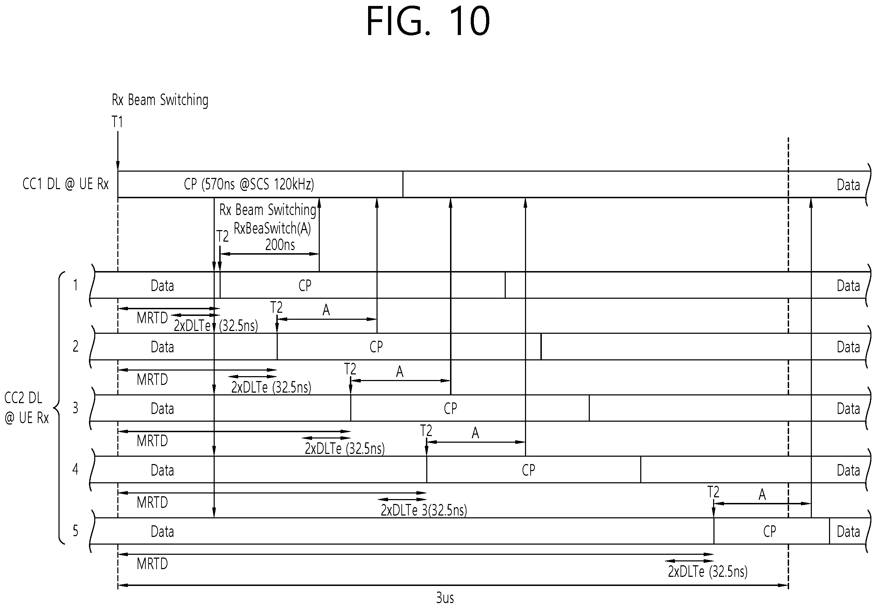

**FIG. 10** **is an exemplary diagram illustrating an example of an Rx beam switch.**

Hereinafter, case A and case B (case B-1, case B-2, case B-3) will be described according to the timing of the Rx beam switch.

Case A is a case where Rx beam switch is performed at T1 of CC1. Case B is a case where Rx beam switch is performed at T2 of CC2.

Case B-1 is a case where MRTD is greater than or equal to 0 and less than or equal to 'CP - Rx beam switch time'. 10, ① and ② correspond to Case B-1.

Case B-2 is a case where MRTD is less than or equal to CP and greater than 'CP - Rx beam switch time'. In FIG. 10, ③ corresponds to Case B-2.

Case B-3 is a case where MRTD is larger than CP and smaller than 3us. 10, ④ and ⑤ correspond to Case B-3.

The Rx beam switch time may be the time required to change the Rx beam to the direction changed due to the movement of the UE in the Rx mode. Also, the Rx beam switch time may be the time required to change from a mode for transmission to a mode for reception.

It is assumed that the Rx beam switch time is 200ns and the DL timing error is 16.2ns. 'CP-Rx beam switch time' may be 370ns.

For Case A, interruption on data in CC2 occurs when Rx beam switch is performed at slot boundary in CC1.

For Case B-1, interruption on data in CC1 does not occur when Rx beam switch is performed at slot boundary in CC2. This is because it corresponds to the CP of CC1.

For Case B-2, interruption on data in CC1 occurs when Rx beam switch is performed at slot boundary in CC2.

For Case B-3, interruption on data in CC1 occurs when Rx beam switch is performed at slot boundary in CC2.

If MTRD is less than 370ns and Rx beam switch is performed in slot boundary in one CC which is received later, performance degradation on the other CC may be avoided due to Rx beam switch. Case B-1 may correspond to this case.

However, if Rx beam switch is performed in slot boundary in one CC which is received earlier, performance degradation on the other CC may occur. Case A may correspond to this case.

If MRTD is larger than 370ns, regardless of which CC is used for Rx beam switch, performance degradation on opposite CC can occur due to Rx beam switch. Case A, case B-2, and case B-3 may correspond to this case.

Regarding one symbol duration including CP is 8.92us, the impacted symbol number may be only one. If Rx beam switch is performed in slot boundary in one CC which is received earlier, last symbol data of slot in the other CC may be interrupted. If Rx beam switch is performed in slot boundary in one CC which is received later, first symbol data of slot in the other CC may be interrupted according to MTRD. In this case, if the symbol is control channel, it may affect data channel and entire performance degradation may be not small.

If the performance degradation due to the Rx beam switch is not allowed, the MTRD for inter-band DL CA based on CBM may be defined as, for example, 260 ns or the MTRD smaller than 'CP - Rx beam switch time' may be defined. Regarding the SCS of 120 kHz, the CP may be 570 ns, the Rx beam switch time may be 200 ns, and the 'CP - Rx beam switch time' may be 370 ns. Regarding SCS of 60 kHz, CP is 1170 ns, Rx beam switch time is 200 ns, and 'CP - Rx beam switch time' may be 970 ns.

Also, if performance degradation due to the Rx beam switch is not allowed, Rx beam switching may be performed at a slot boundary in one CC received later.

Table 9 shows the MTRD for CBM in intra-band DL CA.

**[ Table 9]**

| Frequency Range of the pair of carriers | Maximum receive timing difference (µs) |
|---|---|
| FR1 | 33 |
| FR2 | 8 ^{note1} |
| FR2 | 0.26 (or 0.37) ^{note2} |
| Between FR1 and FR2 | 25 |
| Note1: This requirement applies to the UE capable of independent beam management for FR2 inter-band CA | |
| Note2: This requirement applies to the UE capable of common beam management for FR2 inter-band CA. Performance degradation is not expected when Rx beam switch is performed in slot boundary in one CC which is received later. | |

If performance degradation is allowed due to Rx beam switch, MRTD may be specified as 3us along with the note in Table 10 for inter-band DL CA based on CBM. If performance degradation is allowed due to Rx beam switch, Rx beam switch may be performed in slot boundary in one CC which is received earlier to avoid interruption on control channel.

**[ Table 10]**

| Frequency Range of the pair of carriers | Maximum receive timing difference (µs) |
|---|---|
| FR1 | 33 |
| FR2 | 8 ^{note1} |
| FR2 | 3 ^{note2} |
| Between FR1 and FR2 | 25 |
| Note1: This requirement applies to the UE capable of independent beam management for FR2 inter-band CA. | |
| Note2: This requirement applies to the UE capable of common beam management for FR2 inter-band CA. If the receive time difference exceeds 'CP - Rx beam switch time', i.e, 370ns (for SCS of 120kHz), UE is expected to do Rx beam switch in slot boundary between 'N-1' and 'N' slot in one CC which is received earlier and interruption is expected for the last symbol of `N-1' slot in the other CC. | |

If RTD is smaller than the threshold value, interference may not occur in CC1 even when rx switching is performed in T2 (① and ② in FIG. 10). Here, the threshold value may be a value obtained by subtracting the Rx beam switch time from CP. Here, when subcarrier spacing (SCS) is 120 kHz, the threshold may be 370 ns. If the SCS is 60 kHz, the threshold may be 970 ns. If the RTD is greater than the threshold, rx switching in T2 may cause interference with the data of CC1 (③, ④ and ⑤ in FIG. 10). At this time, if the disturbed symbol is the control channel of CC1, overall performance degradation may be large.

So, if RTD is greater than the threshold, rx switching at T1 may be performed.

If the CP part of FIG. 10 is located in the Nth slot of CC1 and CC2, when Rx switching is performed in T1, interference may occur in the last symbol of the N-1th slot of CC2.

### 2. MTTD (Maximum Transmission Timing Difference) for CBM

In FR2, an MTTD for a CBM UE in inter-band UL CA is described.

In Rel-16, MTTD of 8.5us has been specified for inter-band UL CA with IBM and non-collocated deployment even though corresponding band combination is not defined in RF. Herein, 8.5us was calculated considering additional 0.5us (from Tx timing error and uncertainty of receiver) from MRTD(8us)

For inter-band UL CA with co-located deployment, MTTD has not yet been defined, however, this is expected to be equal to TAE + 0.5us considering no difference of propagation delay between the CC. If reusing TAE for inter-band CA in Rel-16, MTTD may be 3.5us which is larger than CP length. This means that symbol boundary among CCs is not aligned within CP.

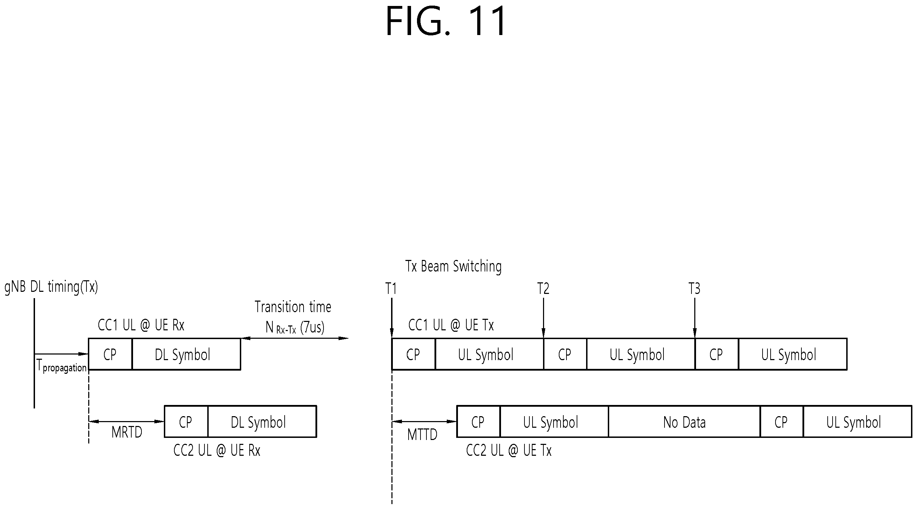

**FIG. 11** **is an exemplary diagram illustrating an example of Tx beam switch of a CBM UE.**

FIG. 11 assumes i) co-located deployment, ii) MTTD (3.5us) > CP, and iii) Same UL-DL configuration for inter-band CA.

It is important how to minimize performance degradation due to Tx beam switching.

T1 is located at the start of the first uplink symbol (including CP) which is earliest among CCs after transition time N_{Rx-Tx}. T2 is is located at uplink symbol boundary between contiguous UL symbols on CC1 and within UL symbol on CC2. T3 is located at uplink symbol boundary between contiguous UL symbols on CC1 and no UL symbol on CC2. T_{propagation} is the propagation delay time, TAE is the timing alignment error in gNB (ex. 3us), N_{Tx-Rx} is the transition time from Tx to Rx (13792Tc = 7us for FR2), and N_{TAoffset} is the TA offset (13792Tc = 7us for FR2). A UE may be not expected to receive in the downlink earlier than N_{Rx-Tx} after the end of the last received downlink symbol in the same cell

For Tx beam switch at T1, there is no interruption on UL data on CC2 due to Tx beam switch.

For Tx beam switch at T2, performance degradation may occur on CC2 since Tx beam switch is performed within symbol on CC2 if MTTD is larger than CP.

For Tx beam switch at T3, there is no interruption on UL data on CC2 due to Tx beam switch.

Generally, in TDD, Tx beam switching does not occur at symbol boundary among UL symbols like T2 and T3 during UL transmission because Tx beam direction is generally decided based on latest Rx beam direction. And, if T1 is the start of the first uplink symbol on CC2 which is not earliest among CCs, performance degradation may occur.

As a result, performance degradation due to Tx beam switching may not occur if switching Tx beam at the start of the first uplink symbol which is earliest among CCs after transition time N_{Rx-Tx}.

For CBM on inter-band UL CA, switching Tx beam may be defined at the start of the first uplink symbol which is earliest among CCs after transition time N_{Rx-Tx} to minimize performance degradation due to Tx beam switching.

To minimize performance degradation due to Tx beam switching, UE may transmit UL symbol in all UL CCs at same time, e.g, with reference to Pcell. In this case, MTTD doesn't have to be defined.

For CBM on inter-band UL CA, UE may be speicified to transmit each UL symbol in all UL CCs at same time after transition time N_{Rx-Tx}. And Tx beam switching may be performed at the first UL symbol which is aligned between UC CCs after transition time NRX-TX.

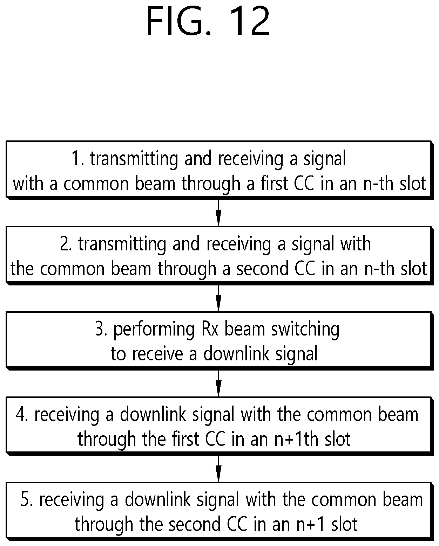

**FIG. 12** **shows a procedure of a terminal according to the disclosure of the present specification.**
1. The UE may transmit and receive a signal with a common beam through a first component carrier, CC, in an n-th slot.

For example, the UE may transmit and receive an uplink signal with the common beam through the first CC in the nth slot. Alternatively, the UE may receive a downlink signal with the common beam through the first CC in the nth slot.

2. The UE may transmit and receive a signal with the common beam through a second CC in an n-th slot.

For example, the UE may transmit and receive an uplink signal with the common beam through the second CC in the nth slot. Alternatively, the UE may receive a downlink signal with the common beam through the second CC in the nth slot.

3. The UE may perform Rx beam switching to receive a downlink signal.

4. The UE may receive a downlink signal with the common beam through the first CC in an n+1th slot.

5. The UE may receive a downlink signal with the common beam through the second CC in an n+1 slot.

The n may be an integer of 1 or greater. And the downlink signal through the first CC may be received earlier than the downlink signal through the second CC.

Based on the time difference between the first CC and the second CC exceeding a threshold value, the Rx beam switching is may be performed at a boundary between the nth slot and the n+1th slot of the 1st CC.

Based on the time difference between the first CC and the second CC exceeding the threshold value, interruption may occur in the last symbol of the n-th slot of the second CC.

Based on SCS being 120kHz, the threshold value may be 370ns. Based on SCS being 60kHz, the threshold value may be 970ns.

The threshold value may be a value obtained by subtracting the time required for beam switching from a cycle prefix (CP).

Hereinafter, a processor for providing mobile communication according to some embodiments of the present specification will be described.

The processor performs operation, which is comprising: transmitting and receiving a signal with a common beam through a first component carrier, CC, in an n-th slot; transmitting and receiving a signal with the common beam through a second CC in an n-th slot; performing Rx beam switching to receive a downlink signal; receiving a downlink signal with the common beam through the first CC in an n+1th slot; and receiving a downlink signal with the common beam through the second CC in an n+1 slot, wherein the n is an integer of 1 or greater,

wherein the downlink signal through the first CC is received earlier than the downlink signal through the second CC, wherein, based on the time difference between the first CC and the second CC exceeding a threshold value, the Rx beam switching is performed at a boundary between the nth slot and the n+1th slot of the 1st CC, wherein, based on the time difference between the first CC and the second CC exceeding the threshold value, interruption occurs in the last symbol of the n-th slot of the second CC.

Hereinafter, a non-volatile computer-readable medium storing one or more instructions for providing mobile communication m according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random-access memory (SDRAM), read-only memory (ROM), or non-volatile random-access memory (NVRAM). Read-only memory (EEPROM), flash memory, magnetic or optical data storage media, or other media that can be used to store instructions or data structures. Non-volatile computer readable media may also include combinations of the above.

Further, the methods described herein may be realized at least in part by computer-readable communication media that carry or carry code in the form of instructions or data structures, and which can be accessed, read, and/or executed by a computer.

According to some embodiments of the present disclosure, a non-transitory computer-readable medium has one or more instructions stored thereon. The stored one or more instructions may be executed by a processor of the UE.

The stored one or more instructions cause the processor to perform operation, which is comprising: transmitting and receiving a signal with a common beam through a first component carrier, CC, in an n-th slot; transmitting and receiving a signal with the common beam through a second CC in an n-th slot; performing Rx beam switching to receive a downlink signal; receiving a downlink signal with the common beam through the first CC in an n+1th slot; and receiving a downlink signal with the common beam through the second CC in an n+1 slot, wherein the n is an integer of 1 or greater, wherein the downlink signal through the first CC is received earlier than the downlink signal through the second CC, wherein, based on the time difference between the first CC and the second CC exceeding a threshold value, the Rx beam switching is performed at a boundary between the nth slot and the n+1th slot of the 1st CC, wherein, based on the time difference between the first CC and the second CC exceeding the threshold value, interruption occurs in the last symbol of the n-th slot of the second CC.

The specification may have various effects.

For example, through the procedure disclosed in this specification, it is possible to avoid deterioration of the reception performance of the CBM UE.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical feature of the method claims of the present specification may be combined and implemented as an apparatus, and the technical features of the apparatus claims of the present specification may be combined and implemented as a method. In addition, the technical feature of the method claims of the present specification and the technical features of the apparatus claims may be combined to be implemented as an apparatus, and the technical feature of the method claims and the technical features of the apparatus claims of the present specification may be combined and implemented as a method. Other implementations are within the scope of the following claims.

## Claims

1. A method for performing communication, performed by a User Equipment, UE, comprising:
transmitting and receiving a signal with a common beam through a first component carrier, CC, in an n-th slot;
transmitting and receiving a signal with the common beam through a second CC in an n-th slot;
performing Rx beam switching to receive a downlink signal;
receiving a downlink signal with the common beam through the first CC in an n+1th slot; and
receiving a downlink signal with the common beam through the second CC in an n+1 slot,
wherein the n is an integer of 1 or greater,
wherein the downlink signal through the first CC is received earlier than the downlink signal through the second CC,
wherein, based on the time difference between the first CC and the second CC exceeding a threshold value, the Rx beam switching is performed at a boundary between the nth slot and the n+1th slot of the 1st CC,
wherein, based on the time difference between the first CC and the second CC exceeding the threshold value, interruption occurs in the last symbol of the n-th slot of the second CC.

2. The method of claim 1,
wherein, based on subcarrier spacing, SCS, being 120kHz, the threshold value is 370ns.

3. The method of claim 1,
wherein, based on SCS being 60kHz, the threshold value is 970ns.

4. The method of claim 1,
wherein the threshold value is a value obtained by subtracting the time required for beam switching from a cycle prefix, CP.

5. A User Equipment, UE, to perform communication, comprising:
a transceiver; and
a processor,
wherein the transceiver transmits and receives a signal with a common beam through a first component carrier, CC, in an n-th slot;
wherein the transceiver transmits and receives a signal with the common beam through a second CC in an n-th slot;
wherein the processor performs Rx beam switching to receive a downlink signal;
wherein the transceiver receives a downlink signal with the common beam through the first CC in an n+1th slot; and
wherein the transceiver receives a downlink signal with the common beam through the second CC in an n+1 slot,
wherein the n is an integer of 1 or greater,
wherein the downlink signal through the first CC is received earlier than the downlink signal through the second CC,
wherein, based on the time difference between the first CC and the second CC exceeding a threshold value, the Rx beam switching is performed at a boundary between the nth slot and the n+1th slot of the 1st CC,
wherein, based on the time difference between the first CC and the second CC exceeding the threshold value, interruption occurs in the last symbol of the n-th slot of the second CC.

6. The UE of claim 5,
wherein, based on subcarrier spacing, SCS, being 120kHz, the threshold value is 370ns.

7. The UE of claim 5,
wherein, based on SCS being 60kHz, the threshold value is 970ns.

8. The UE of claim 5,
wherein the threshold value is a value obtained by subtracting the time required for beam switching from a cycle prefix, CP.

9. An apparatus in mobile communication, the apparatus comprising:
at least one processor; and
at least one memory storing instructions and operably electrically connectable with the at least one processor;
operation performed, based on the instructions being executed by the at least one processor, comprising:
transmitting and receiving a signal with a common beam through a first component carrier, CC, in an n-th slot;
transmitting and receiving a signal with the common beam through a second CC in an n-th slot;
performing Rx beam switching to receive a downlink signal;
receiving a downlink signal with the common beam through the first CC in an n+1th slot; and
receiving a downlink signal with the common beam through the second CC in an n+1 slot,
wherein the n is an integer of 1 or greater,
wherein the downlink signal through the first CC is received earlier than the downlink signal through the second CC,
wherein, based on the time difference between the first CC and the second CC exceeding a threshold value, the Rx beam switching is performed at a boundary between the nth slot and the n+1th slot of the 1st CC,
wherein, based on the time difference between the first CC and the second CC exceeding the threshold value, interruption occurs in the last symbol of the n-th slot of the second CC.

10. A non-volatile computer-readable storage medium having recorded thereon instructions,
wherein the instructions, when executed by one or more processors, cause the one or more processors to:
transmitting and receiving a signal with a common beam through a first component carrier, CC, in an n-th slot;
transmitting and receiving a signal with the common beam through a second CC in an n-th slot;
performing Rx beam switching to receive a downlink signal;
receiving a downlink signal with the common beam through the first CC in an n+1th slot; and
receiving a downlink signal with the common beam through the second CC in an n+1 slot,
wherein the n is an integer of 1 or greater,
wherein the downlink signal through the first CC is received earlier than the downlink signal through the second CC,
wherein, based on the time difference between the first CC and the second CC exceeding a threshold value, the Rx beam switching is performed at a boundary between the nth slot and the n+1th slot of the 1st CC,
wherein, based on the time difference between the first CC and the second CC exceeding the threshold value, interruption occurs in the last symbol of the n-th slot of the second CC.
